# EUROPEAN PATENT APPLICATION

(11) **EP 4 741 432 A1**
(43) Date of publication of application: **13.05.2026**
(21) Application number: 24212186.1
(22) Date of filing: 11.11.2024
(51) Int. Cl.: C08G 18/10, C08G 18/18, C08G 18/32, C08G 18/48, C08G 18/66, C08G 18/76, C09J 175/04, C09J 175/08, E04C 2/00, E04F 13/00

(54) **TWO-COMPONENT FILLING COMPOSITION FOR DRYWALL APPLICATIONS**

(71) Applicant: Sika Technology AG, 6340 Baar (CH)
(72) Inventor: ALTENWEGNER, Florian, 22525 Hamburg (DE); LABOUREIX, Gabriel, 8048 Zürich (CH); CHOFFAT, Fabien, 8048 Zürich (CH); HAEGLER, Matthias, 8967 Widen (CH); LANGENEGGER, Marcel, 8967 Widen (CH)
(74) Representative: Sika Patent Attorneys

(57) **Abstract**

The present invention is concerned with the use of a two-component polymer based putty composition for the covering/filling of joints between plasterboards in dry walls, wherein the composition comprises a polyol component A and a polyisocyanate component B and is free of plasticizers. The use of a respective composition enables a fast, convenient and easy preparation of covered plasterboard joints, which provide excellent stability against crack formation. The present invention is also concerned with drywall constructions, wherein gaps between adjacent plasterboards are filled with a respective two-component polymer based putty composition, kits constituted from such compositions and applicators for the same, processes for the production of drywalls, which involve the use of a respective composition and a use of a respective composition to reduce or prevent surface cracks in joints of a drywall.

## Description

The present invention is concerned with the use of a two-component polymer based putty composition for the covering/filling of joints between plasterboards in dry walls, wherein the composition comprises a polyol component A and a polyisocyanate B component and is free of plasticizers. The present invention is also concerned with drywall constructions, wherein gaps between adjacent plasterboards are filled with a respective two-component polymer based putty composition, kits constituted from such compositions and applicators for the same, processes for the production of drywalls, which involve the use of a respective composition and a use of a respective composition to reduce or prevent surface cracks in joints of a drywall.

### State of the art

In drywall construction, different types of panels are used to form interior walls and ceilings. Typically, the panels are used in the form of boards, which are attached against frame members, such as in known in the art as balloon frame assemblies. Examples include plasterboard coated with paper, also known as wallboard or drywall, paperless plasterboard made with fiber mats (e.g. fiberglass), and the like. These and other types of boards are typically cut to suitable dimensions and then attached to frame members, e.g. with screws, nails or the like to form wall sections which are formed from several boards.

Two panels lying next to each other, which are arranged in the same plane, form a connection seam or joint on vertical walls and horizontal ceilings. If these joints are just filled with a mineral based conventional filler or putty, there is a risk for the formation of cracks filler in the joints, which may form when the putty is dried or when the boards extend or contract due to variations of the temperature. To avoid such crack formation, in the prior art these joints are usually first filled with a putty and then covered with a joint reinforcement tape. Examples of joint reinforcement tapes that can be used and conventional methods for filling joints with such tapes are described, for example, in US Pat. No. 2,850,404 or US Pat. No. 6,668,897. After the compounds, which are applied to cover the joint, have sufficiently dried, the resulting surfaces can be sanded and painted to achieve the desired uniform and aesthetically pleasing appearance.

In gypsum drywall construction, the tape which is commonly used to bridge the seam between adjacent plasterboards is usually based on paper. Alternatively, glass fiber tapes or other flat fiber structures can be used. In the course of the preparation of the covered joint, the tape is usually embedded into the joint compound and then covered by at least one subsequent layer of joint filler to provide a uniform surface. The function of the tape in this construction is to bridge the neighboring panels, to give the connection strength and reinforcement against visible hairline cracks on the surface, which can form as a result of shrinkage and settlement when the construction is dried or as a result of mechanical stresses.

The introduction of a paper strip involves several repetitive steps, which makes the process relatively time-consuming. In addition, the subsequent spackling is highly demanding on the skill of the worker, because if the strip is improperly applied bubbles can occur, which often will become visible only after the joint has completely dried. In this case, a worker has to cut the tape from the joint and has to again apply a thin layer of joint filler and adhesive tape before he can continue with the next step.

Evidently, thus, this conventional method is comparatively complex and error prone.

WO 2017/044329 proposes a flexible adhesive composition for filling joints between plasterboard, which is formed from fibers, a binder of polymer resin, water, and a thickener. Instead of a filler, this adhesive composition is applied to the joint edge area between two panels and dried, so that the application of a joint reinforcement tape is no longer necessary. WO 2017/044329 claims that compared to conventional joint reinforcement tapes even better mechanical properties are achieved.

Whereas the solution described in WO 2017/044329 is quite simple and does not involve many steps, the composition described in this document comprise high quantities of water, so that the composition is not suitable to fill joints between plasterboards with curved edges. In addition, since the compositions in this document are water based, some time for drying is necessary before subsequent treatment step such as sanding can be applied to the surface.

WO 2023/274487 A1 describes a polymer based sprayable mixture for covering joints between plasterboards, which are formed from 0.01 to 10 wt.-% of a fibrous material, 1 to 20 wt.-% of a binder, 1 to 10 wt.-% of a thickener and 50 to 07.99 wt.-% of a solvent, wherein the fibrous material and binder are present in a ration of from 1:1 to 1:5. This mixture is used similar to an adhesive tape, i.e. the joint is first filled with a putty, and then overcoated with the sprayable mixtures which forms a cohesive coating over the joint. This coating in a final step is then covered with another layer of putty.

Whereas the sprayable mixture of WO 2023/274487 A1 simplifies the covering of respective joint, in that the sprayable mixture can be more easily applied that a corresponding tape, the complete covering process of the joint still comprises a plurality of steps.

Accordingly, there is a need for a need for an easy to use and fast curing joint filling composition, which avoids the necessity of the use of adhesive tapes.

The present application addresses this need.

### Description of the invention

In the investigations, which are underlying the present invention, is has been found that the formation of joints which are stable against crack formation is possible by using a two-component polyurethane based putty composition, which on curing forms a firm but sufficiently elastic joint. Accordingly, by use of such composition, a stable joint connection may be formed in a single step, and since the curing is not based on an evaporation of water, it is possible to adjust the curing speed to the required need. For the development of respective putty compositions, there are two important conflicting requirements, namely, that the composition must cure to a state where it is sandable (which requires the cured putty to be sufficiently hard) and on the other hand in the cured state must provide the required flexibility and toughness to compensate residual movements of the installed plasterboards in the drywall construction to avoid crack formation. In the investigation, which are underlying the present invention, it has been found that these conflicting requirements can be satisfied with a two-component polymer based putty composition as described herein below. With a respective putty composition, it is possible to achieve a hardness of the composition which is sufficient for a stable sanding treatment in a short time, which even allows completion of the construction of a drywall in a single workday.

Accordingly, in a first aspect, the present invention is directed at the use of a two-component polymer based putty composition for the covering/filling of joints between plasterboards in dry walls, wherein the composition comprises a polyol component A and a polyisocyanate B component.

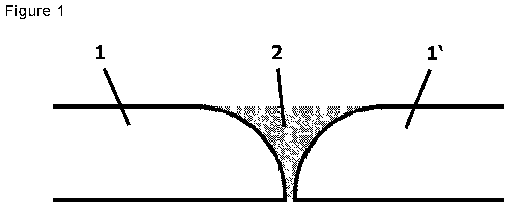

An Example of plasterboard joint is shown in Figure 1 below, where 1 and 1' represent the respective edges of the plasterboard and 2 represents the joint, which is provided by the two-component polymer based putty composition.

In order to avoid a migration of plasticizer into a paint, which is applied over a filling joint prepared from the two-component polymer based putty composition, the composition is preferably substantially free of plasticizers (i.e. the amount of plasticizer in the composition is adjusted to not be more than about 5 wt.-%, in particular not more than about 1 wt.-% and preferably not more than about 0.5 wt.-% and even more preferably not more than 0.1 wt.-%, relative to the total weight of the composition after mixing). In one embodiment, the two-component polymer based putty composition is free of plasticizer.

"Plasticizer", as this term is used in the context of this invention, designates compounds, which at ambient temperature are liquid and on the reaction of the polyols and polyisocyanates in the composition will not be covalently incorporated into the polyurethane polymer. As plasticizers mainly serve the purpose of making a composition more flexible and/or elastic, compounds, which are incorporated for other purposes (such as to catalyze the reaction of the polyols and polyisocyanates or functional additives, e.g. defoamers), are not intended to be encompassed as plasticizers, even if the respective compounds fulfil the above requirement. In this regard, it is noted thought that such compounds will normally only be used in low quantities (in order to provide the desired effect), so that in most cases the amount requirements as in the above will be complied with even if such compounds are accounted for as plasticizers. In other words, the amount of compounds in the two component polymer based putty compound, which are liquid at ambient temperature, which will not be covalently be incorporated into the polyurethane polymer, and which are not added as plasticizers is preferably not more than about 5 wt.-%, in particular not more than about 1 wt.-%, more preferably not more than about 0.5 wt.-% and even more preferably not more than 0.1 wt.-%, relative to the total weight of the compound after mixing than.

In the application, the term "polymer based" designates the fact, that the putty composition comprises relevant amounts of polymer as binding agent, which is in contrast to conventional filling compounds, which rely on mineral binders such as gypsum. Preferably, the content of the polymer in the inventive polymer based putty composition is as least 40 wt.-%, more preferably at least 50 wt.-% and even more preferably in the range from 60 to 95 wt.-%.

The two-component polymer based putty composition in the respective components comprises polyols and polyisocyanates, which when brought together react with one another by crosslinking and thereby provide a solidification and hardening of the composition.

To enable a stable mixing of the two components of the two-component polymer based putty composition, the respective components should be formulated such that the ratio of mixing to provide the filling composition is not excessive. Suitable ratios of the components A and B of the two-component polymer based putty composition in particular in the range of from about 1:1 to 10:1 (A/B ratio), preferably in the range of about 1:1 to 4:1 and more preferably in the range of 1.5:1 to 2.5:1.

As noted above, the two-component polymer based putty composition comprises the polymer as a binder as the most relevant constituent, so that the polyol and polyisocyanate in the respective components A and B will usually also constitute the most relevant compounds in the components. In this regard, it is preferred that the component A comprises from 50 to 85 wt.-% of one or more polyols, and the component B comprises 50 to 85 wt.-% of a polyisocyanate, wherein the respective weight % relates to the total weight of the component.

In addition, to provide the required toughness of the cured filler and for cost control, it is preferred that the two-component polymer based putty composition comprises 8 to 50 wt.-% of a combination of filler and light weight filler, in particular 8 to 50 wt.-% of a combination of filler and light weight filler in the respective components A and B. Furthermore, to facilitate overpainting of the cured putty compositions it is preferred that the two-component polymer based putty composition comprises 0.5 to 5 wt.-% of a colorant, preferably a white colorant as essentially any color can be applied over such colorant. In one preferred embodiment, both components A and B comprise 0.5 to 5 wt.-% of a colorant.

The colorant is preferably a pigment, and in particular a white pigment, as such pigment will not dissolve on application of water even when a paint is applied. Appropriate white pigments include e.g. CaCOs (chalk, or limestone).

A lightweight filler, as this term is used in this application, is a filler with a bulk weight of less than 1 g/cm³ and preferably 0.6 g/cm³ or less. Filler components, which have a bulk weight of 1 g/cm³ or more in this invention are considered as (non-lightweight) fillers. The lightweight filler in the putty composition of the invention can have a synthetic or natural basis in the form of hollow microspheres of glass, aluminium-silicate, calcium-silicate hydrate, calcium-metasilicate, and/or calcium-aluminium-silicate. A preferred lightweight filler is hollow glass microspheres, in particular with a bulk weight in the range of 0.1 to 0.4 g/cm³ and more preferably in the range of 0.15 to 0.3 g/cm³.

Fillers, which can be incorporated into the inventive putty composition, are suitably based on SiO₂ or CaCO₃, such as such as e.g. quartz sand, fumed silica, talcum, gypsum, and/or limestone powder. Also suitable are molecular sieves or zeolites. Further suitable fillers include flame-retardant fillers such as aluminium hydroxide and/or magnesium hydroxide, which add flame-retardant properties to the composition.

The indication "a combination of filler and lightweight filler" in the above covers compositions with one filler and more than one filler as well as one lightweight filler and more than one lightweight filler. In addition, it is envisaged by this invention that the inventive putty composition may only comprise either of fillers or lightweight fillers.

For the inventive putty composition, it is preferred that the ratio of light weight filler to filler form 5:1 to 1:2 and preferably from 3:1 to 1:1.

With regard to the polyol, which is used in the component A, the present invention is not subject to any relevant limitations. From a standpoint of providing sufficient flexibility of the putty after curing, it is preferred however, that the polyol comprises a polymeric polyol, preferably an aliphatic polymeric polyol. Preferred among polyols are diols and triols, but also higher functional polyols can be added to increase crosslinking density in the cured product. Most preferred are diols. In addition, to be able to have more flexibility in adjusting the final properties of the cured putty, it is preferred that the polyol in addition comprises a polyol with a molecular weight of 500 or less (i.e. a "small molecule" polyol).

Furthermore, mono-alcohols can be added to the polyol mixture to adjust the overall average polyol functionality.

As noted above the polymeric polyol is preferably aliphatic polymeric polyol, which in the context of this invention denotes a polyol, which does not comprise aromatic moieties in relevant amounts. Preferably, the aliphatic polymeric polyol does not comprise aromatic moieties in an amount of more than 2 wt.-% (relative to the total weight of the polymeric polyol, where only aromatic rings are accounted for as aromatic moieties), more preferably not more than 1 wt.-% and even more preferably not more than 0.1 wt.-%. Suitable aliphatic polymeric polyols include e.g. polyether glycols, polyester glycols, a polythioether polyol, polycarbonate polyols, hydroxyl-containing aliphatic polyacetates and/or a hydroxyl-containing aliphatic polycarbonates. Particularly preferred aliphatic polymeric polyols are polyether glycols, and in particular polyether glycols selected from the group of polypropylene glycol, polyethylene glycol, copolymers of propylenoxide and ethylene oxide, and polytetrahydrofuran. Copolymers of propylenoxide and ethylene oxide include random copolymers as well as blockcopolymers of the respective monomers.

An especially suitable polymeric polyol is a blockcopolymer of the type ABA, where A designates end blocks on the basis of ethylene oxide and B designates a middle block on the basis of propylene oxide. These block copolymers may also be designated as "ethylene glycol end blocked polypropylene glycols". The ethylene glycol end blocks in this case prove terminal primary amino groups, which ensure a fast reaction with isocyanate groups and thus is sufficient curing speed of the two-component polymer based putty composition.

The molecular weight of the polymeric polyol the flexibility of a polyurethane polymer, which is formed with the polymeric polyol. For the purposes of this invention, it is preferred that the molecular weight in in the range from 2000 to 10000 g/mol and preferably from 3000 to 6000 g/mol. The molecular weight of the respective polymeric polyol can be determined by GPC and use of appropriate standards.

As noted above, the polyol component preferably further comprises polyol with a molecular weight of 500 or less, which can be a polyol with an aromatic or aliphatic backbone or a backbone comprising aliphatic or aromatic parts. For the purposes of the invention, is preferred that the hydroxy groups of the polyol are attached to aliphatic carbon atoms. Polyols, which can suitably be used e.g. include diols comprising an ethylene-, propylene-, butylene-, pentylene- and/or hexylene-residue. The polyol may also be a polyol with a cycloaliphatic residue, e.g. on the basis of cyclopropylene-, cyclobutylene-, cyclopentylene-, dicyclohexylmethylene-, cyclohexylene- and/or an isophorone residue. A heterocyclic residue, which can be comprised in the polyol includes e.g. the furfuryl-residue. Particularly preferred as polyols having with a molecular weight of 500 or less are linear aliphatic residues having OH-Groups attached to the respective α- and ω-carbon atom of the residue.

The weight ratio of polymeric polyol to polyol with a molecular weight of 500 or less is in the range form 2:1 to 10:1, more preferably form 3:1 to 8:1 and even more preferably from 4:1 to 6:1.

The polyisocyanate, which is comprised in the component B of the inventive two-component polymer based putty composition is also not subject to relevant limitations. Possible specific compounds, which may be used as the polyisocyanate, include e.g. aliphatic polyisocyanates such as isophorone diisocyanate, hexamethylene diisocyanate, dicyclohexylmethane 4,4'-diisocyanate, hexane diisocyanate, bis(isocyanatomethyl)cyclohexane, and aromatic polyisocyantes tolylene diisocyanate and/or diphenylmethane diisocyanate, in particular 4,4'-diphenylmethane diisocyanate. In a particularly preferred embodiment, the polyisocyanate comprises diphenylmethane diisocyanate or consists of diphenylmethane diisocyanate, in particular 4,4'-diphenylmethane diisocyanate. The respective diisocyanates may be used in monomeric, oligomeric (e.g. dimeric or trimeric) or polymeric form. To provide a crosslinked polyurethane, the use of oligomeric diisocyanates is preferred and the use of polymeric diisocyanates is particularly preferred.

It is also possible that isocyanate prepolymers with a structure ABA may be used as the polyisocyanate, where A indicates a diisocyanate and B indicates a polyol moiety, where the OH-Groups of the polyol have reacted with one of the Isocyanate groups in the diisocyanate. Also, it is possible that the polyisocyanate is a mixture of such isocyanate prepolymers and additional polyisocyanurate, which are e.g. obtainable by reacting a polyol with a diisocyanate in a ratio of less than 1:2 (e.g. 1:3 or less).

For the purposes of this invention the ratio of NCO to OH from the polyisocyanates and the polyols within the inventive two-component polymer based putty composition is preferably adjusted such that there is an about equal amount of NCO and OH, where a small excess of NCO is usually possible to ensure that in the reaction substantially all OH groups of the polyol react with an NCO group. A particular preferred NCO/OH ration is in the range form 1.2:1 to 1:0.95, and especially 1.1:1 to 1:1 or even 1.0 to 1.01.

For the above, it is possible that that either of the polyisocyanate, the polyol or both comprise tri- or higher functional compounds. Preferably, however, the content of such compounds, on the total weight of the polyol and polyisocyanate is limited to allow a sufficient open time of the composition. I.e. it is preferred that the content of tri- or higher functional polyols and polyisocyanates, relative to the total of the polyols and polyisocyanates, respectively, is 10 % or less and more preferably 5% or less. In one particularly preferred embodiment, the polyisocyanate and polyol in the inventive putty composition is only difunctional polyisocyanate and polyol.

Next to the polyols, polyisocyanates fillers and coloring agents, the inventive two-component polymer based putty composition may comprise conventional additives to adjust and optimize curing of the composition or the processing's characteristics thereof. E.g. the inventive putty composition may suitably comprise a catalyst, which facilitates the reaction of NCO and OH. A suitable catalyst is e.g. [2.2.2]-diazabicyclo octane (DABCO). Suitable processing additives include e.g. defoamers, antioxidants, flow control auxiliaries, deaeration auxiliaries, rheological aids, stabilizers against oxidative, hydrolytic, radiation-induced or microbial degradation or aging, release agents. For these additives, it is usually preferred that their content in the inventive putty composition does not exceed 2 wt.-% and preferably does not exceed 1 wt.-%.

In addition, it is possible to stabilize the polyol component A and/or polyisocyanate component B by incorporation water absorbing agent, such as a molecular sieve or an appropriate zeolithe. This such compound influences the behavior of the composition similar to a filler, it is possible that the amount thereof in the compound is higher than 5 wt.-%. In most cases, it will be sufficient however, that a molecular sieve or zeolithe is present in the composition in not more than 2.5 wt.-% (relative to the weight of the whole composition with components A and B), and in particular in a range of 0.5 to 2.0 wt.-%.

A particular preferred two-component polymer based putty composition according to the present invention has one or more of the following properties:
- an open time of about 2 min to 10 and preferably 2.5 min to 5 min;
- a time until the two component two-component polymer based putty composition is cured to 80% in the range of 45 Min to 120 Min, and preferably 50 Min to 90 Min.
- a viscosity of the components A and/or B in the range of 20 to 120 Pas and in particular 30 to 70 Pas.

The viscosity can be measured on a plate-plate rheometer MCR 302 (Anton Paar) with a plate diameter of 25 mm and a plate spacing of 1 mm at a temperature of 20°C and at a shear rate of 10 s⁻¹.

To provide the required elasticity of the cured two-component polymer based putty composition, so that it can withstand minor movements of plasterboards it is preferred that the cured putty composition has a Youngs modulus in the range of 10 to 100 MPa, preferably in the range of 20 to 50 MPa and/or an elongation at break in the range from 50 to 200 %, preferably 80 to 175% and more preferably 90 to 150%. These parameters in the context of this invention are determined according to DIN EN ISO 527.

To provide suitable processing characteristics, it is furthermore expedient that the two-component polymer-based putty composition after mixing has an open time of about 2 min to 10 and preferably 2.5 min to 5 min. The open time here designates the time from the mixing of the respective components until the mixed putty composition has a viscosity that it can no longer properly be to the properly be processed. The terms "open time" or "pot life" indicate the period of time between the mixing of the components and the time when the composition is no longer applicable as specified. A process, by which the open time or pot life can be determined for the purposes of this invention is given below in the examples section.

In addition, it is preferred that the mixed putty composition has a time until the two-component polymer based putty composition is cured to 80% of its final hardness in the range of 45 Min to 120 Min, and preferably 50 Min to 90 Min. thereby, it is ensured that after this time the thus prepared surface can be further processed, e.g. by sanding treatment. Final hardness is reached after 24 h of curing at 23°C and 50% relative humidity.

With regard to the above, for completeness it is noted that the compositions as described above are described herein not only in the context of the claimed use, but also in general. Thus, i.e. the present disclosure also covers of a two-component putty compound for the covering/filling of joints between plasterboards in dry walls, wherein the composition comprises a polyol component A, a polyisocyanate component B and is free of plasticizers. In pa particularly embodiment, the polyol component A in this composition comprises 60 to 85 Wt.-% of polyol, 0.5 to 5 wt.-% of a pigment colorant, 5 to 30 wt.-% of fillers with 3 to 20 wt.-% of lightweight filler and 2 to 10 wt.-% of regular filler, optionally up to 5 wt.-% of a water absorbing agent, and optionally up to 1.5 wt.-% of catalyst and further additives, whereas the polyisocyanate component B comprises 60 to 85 wt.-% of polyisocyanate, 0.5 to 5 wt.-% of a pigment colorant, 5 to 30 wt.-% of fillers with 3 to 20 wt.-% of lightweight filler and 2 to 10 wt.-% of regular filler, and optionally up to 1.5 wt.-% of catalyst and further additives. Embodiments and selection, which in the context of the above have been described as preferred in the context of the use as described are also considered as preferred for the putty composition as such.

In a further aspect, the present application concerns a drywall construction, which comprises a drywall truss and a continuous wall of plasterboards applied thereon, wherein gaps and/or joints between adjacent plasterboards are filled with a two-component polymer based putty composition as described above. The surface of the gaps and/or joint may be the raw surface after the application of the two-component polymer based putty composition on the respective joints and/or gaps or may be the surface after sanding and/or painting treatment.

In a yet further aspect, the present application concerns a kit, which comprises a two-component polymer based putty composition as described above, where the respective components are provided in separate compartments, and an applicator, from which the respective components can be mixed and applied to a substrate. Such application regularly has means, where the respective compartments (e.g. in the form of a cartridge) can be fixed and maintained in the applicator, and feed lines, via which the respective components can be guided to a space, where the components are mixed.

In a preferred embodiment, the surface applicator is a manual applicator. A manual applicator here means the application of the two-component polymer based putty composition is regulated by a manual signal, which encompasses the cases that the respective components are transported to the mixing space by manual force and the case where the transport is provided by electrical support (by means of respective motor) and where the manual signal only activates or deactivates this electrical support. In another preferred embodiment, the surface applicator is a fully automatic applicator, which is e.g. used in the fully automatic production of prefabricated building elements.

The mixer, which is used to mix the two components of the two-component polymer based putty composition can be a dynamic or static mixer, but preferably is a static mixer.

In a yet further aspect, the present application concerns a process for the production of a drywall construction comprising the steps of
- providing a drywall truss;
- attaching a plurality of plasterboards to the drywall truss in a manner that the edges of the plasterboards contact each other or a spaced at a distance of at most 2 mm;
- applying a two-component polymer based putty composition as described above over the joints of two adjacent plasterboards;
- allowing the two-component polymer based putty composition to cure to thereby produce the drywall, preferably at ambient temperature.

This process in a preferred embodiment further comprises a step, where the joint surface, after the two-component polymer based putty composition has sufficiently cured, is sanded to provide a smooth surface. Sanding preferably involves the use of 240 grit sand paper or sandpaper with a lower grit than 240, or a sanding means with an equivalent surface roughness. Preferred sandpaper grit are between 80 and 120.

In a particularly preferred embodiment, the process further comprises a step where after the sanding a cover of paint is applied to the surface of the drywall.

As the two-component polymer based putty composition of the invention provides a stable and partially elastic filling, an application of a conventional adhesive tape is not necessary. Thus, in the above use, drywall and process it is preferred that no such tape is used, provided or applied.

The inventive two-component polymer based putty composition provide the particular benefit of a good prevention of surface cracking of respective plasterboard joints in drywalls. Thus, in a yet further aspect, the present application also concerns a use of a two-component polymer based putty composition to reduce or prevent surface cracks in joints of a drywall.

In the following, the present invention will be further described by means of illustrative examples, which however are not intended in limiting in any manner to the scope of the invention.

### Example 1:

A two-component putty composition with the composition as given in the below table 1 (with separate components A and B) was formulated. For an application of the composition, the respective components were mixed in an A:B-ratio of 2:1 and applied over a butt joint of two gypsum building boards. After the composition had cured for 60 Minutes, it was sufficiently stable for sanding with a 240 sandpaper (no clogging was observed) and had good paintability.

The **open time** was measured in a viscometer as the time until the viscosity started to increase sharply after mixing the two components. Specifically, the point of intersection of the slope of the viscosity (y-axis) with time (x-axis) was defined as the pot life. The viscosity was measured on a plate-plate rheometer MCR 302 (Anton Paar) with a plate diameter of 25 mm and a plate spacing of 1 mm in oscillation mode with a frequency of 6 rad s⁻¹, amplitude gamma = 0.2%, normal force 0N a temperature of 20°C. For this purpose, the two components were mixed using a double cartridge dispenser (containing component A and B in each cartridge, respectively), equipped with a static mixer and directly applied to the plates for the measurement.

To determine the mechanical properties, the adhesive was made into a dumbbell shape in accordance with ISO 527, Part 2, 1B, and stored or cured for 24 hours at 23 °C. After a conditioning time of 24 hours, the modulus of elasticity ("**E-modulus"),** the **tensile strength** and **elongation at break of** the test specimens produced in this way were measured in accordance with DIN EN ISO 527 on a Zwick Z020 tensile testing machine at 23°C / 50% r.h. and a test speed of 10 mm / min.

**Table 1:**

| Component A | Quantity | Component B | Quantity |
|---|---|---|---|
| EO-terminated PPG (Mw 4000) | 66.0 | polymeric MDI | 79.75 |
| 1,5 Pentanediol | 11.8 | Hollow glass sphere¹ | 8.35 |
| Hollow glass sphere' | 7.2 | Hollow glass sphere² | 6.6 |
| Hollow glass sphere² | 5.7 | Fumed silica | 4.0 |
| Fumed silica | 5.0 | Colorant (chalk) | 1.2 |
| Zeolite | 2.5 | Defoamer | 0.1 |
| Colorant/filler (chalk) | 1.2 | | |
| Amine Catalyst | 0.5 | | |
| Defoamer | 0.1 | | |

| | | | |
|---|---|---|---|
| 1 = density of 0.22 g/cm³; 2 = density of 0.28 g/cm³ | | | |

On 2:1 mixing the composition had an OH:NCO ratio of about 0.96 (i.e. there was a slight excess of NCO over OH).

The composition in table 1 had an open time of 1.5 min, a tensile strength of 2.6 MPa, an elongation of 135% and an E-modulus (0.05-0.25%) of 38.6 MPa.

After curing for 24 h at 23°C and 50% r.h., the composition was smoothed using sandpaper of grit 80 and 120, which produced a sufficiently smooth surface.

## Claims

1. Use of a two-component polymer based putty composition for the covering/filling of joints between plasterboards in dry walls, wherein the composition comprises a polyol component A and a polyisocyanate component B, wherein the two-component polymer based putty composition is preferably free of plasticizers.

2. Use according to claim 1, wherein the component A and B of the two-component polymer based putty composition are provided in an A/B ratio in the range of from about 1:1 to 10:1, preferably in the range of about 1:1 to 4:1 and more preferably in the range of 1.5:1 to 2.5:1.

3. Use according to claim 1 or 2, wherein the component A comprises from 50 to 85 wt.-% of one or more polyols, the component B comprises 50 to 85 wt.-% of a polyisocyanate, and the respective components A and B further comprise 8 to 50 wt.-% of a combination of filler and light weight filler and 0.5 to 5 wt.-% of a colorant.

4. Use according to any one of claims 1 to 2, wherein the component A of the two-component polymer based putty composition comprises a mixture of polymeric polyol and polyol with a molecular weight of 500 or less, preferably wherein the weight ratio of polymeric polyol to polyol with a molecular weight of 500 or less is in the range form 2:1 to 10:1, more preferably form 3:1 to 8:1 and even more preferably from 4:1 to 6:1.

5. Use according to claim 4, wherein the polymeric polyol is a polyether glycol, preferably selected from polypropylene glycol, polyethylene glycol, copolymers of propylenoxide and ethylene oxide, and polytetrahydrofurane, more preferably wherein the polyether glycol is a blockcopolymer of the type ABA, where A designates end blocks on the basis of ethylene oxide and B designates a middle block on the basis of propylene oxide.

6. Use according to any one of claims 1 to 5, wherein the two-component polymer based putty composition in the component B comprises a polyisocyanate selected from isophorone diisocyanate, hexamethylene diisocyanate, dicyclohexylmethane 4,4'-diisocyanate, hexane diisocyanate, bis(isocyanatomethyl)cyclohexane, tolylene diisocyanate and/or diphenylmethane diisocyanate, preferably wherein the polyisocyanate comprises diphenylmethane diisocyanate.

7. Use according to any one of claims 1 to 6, wherein the two-component polymer based putty composition, when cured has a Youngs modulus in the range of 10 to 100 MPa, preferably in the range of 20 to 50 MPa and/or an elongation at break in the range from 50 to 200 %, preferably 80 to 175% and more preferably 90 to 150%.

8. Use according to any one of claims 1 to 7, wherein the two-component polymer based putty composition has one or more of the following properties:
- an open time of about 2 min to 10 and preferably 2.5 min to 5 min;
- a time until the two component two-component polymer based putty composition is cured to 80% I the range of 45 Min to 120 Min, and preferably 50 Min to 90 Min.
- a viscosity of the components A and/or B in the range of 20 to 120 Pas, in particular 30 to 70 Pas.

9. A drywall construction comprising a truss and a continuous wall of plasterboards applied thereon, wherein gaps and/or joints between adjacent plasterboards are at least partially filled with a two-component polymer based putty composition as described in any one of claims 1 to 8.

10. A kit comprising a two-component polymer based putty composition as described in any one of claims 1 to 8, where the components A and B are provided in separate compartments, and an applicator, from which the respective components can be mixed and applied to a substrate, wherein preferably the surface applicator is a manual applicator.

11. Kit according to claim 10, wherein the applicator is provided with a static mixer to mix the components of the two-component polymer based putty composition.

12. Process for the production of a drywall construction comprising the steps of
- providing a drywall truss;
- attaching a plurality of plasterboards to the drywall truss in a manner that the edges of the plasterboards contact each other or a spaced at a distance of at most 2 mm;
- applying a two-component polymer based putty composition as defined in any one of claims 1 to 8 over the joints of two adjacent plasterboards;
- allowing the two-component polymer based putty composition to cure to thereby produce the drywall, preferably at ambient temperature.

13. Process according to claim 12, wherein after two-component polymer based putty composition has cured, the joint surface is sanded to provide a smooth surface, preferably with 240 sand paper.

14. Process according to claim 13, wherein after sanding a cover of paint is applied to the surface of the drywall.

15. Use of a two-component polymer based putty composition to reduce or prevent surface cracks in joints of a drywall.
